# EUROPÄISCHE PATENTANMELDUNG

(11) **EP 4 701 053 A1**
(43) Veröffentlichungstag der Anmeldung: **25.02.2026**
(21) Anmeldenummer: 24195406.4
(22) Anmeldetag: 20.08.2024
(51) Int. Cl.: H02K 9/04, H02K 9/14, H02K 44/04

(54) **VORRICHTUNG ZUR KÜHLUNG EINER DYNAMOELEKTRISCHEN MASCHINE**

(71) Anmelder: Siemens Aktiengesellschaft, 80333 München (DE)
(72) Erfinder: Seufert, Reiner, 97616 Salz (DE); Vollmer, Rolf, 36129 Gersfeld (DE)
(74) Vertreter: Siemens Patent Attorneys

(57) **Zusammenfassung**

Die Erfindung betrifft eine Vorrichtung zur Kühlung einer dynamoelektrischen Maschine (10), aufweisend wenigstens eine Ladungsquelle und/oder eine Anoden-Kathoden-Strecke zur Erzeugung einer Strömung eines Kühlmediums durch elektrostatische Kräfte.

## Beschreibung

Die Erfindung betrifft eine Vorrichtung zur Kühlung einer dynamoelektrischen Maschine.

Durch Kühleinrichtungen soll Wärme aus Elektromotoren herausgeleitet oder von den Elektromotoren abgeleitet werden. Insbesondere Magnete, Wicklung aber auch Sensorsysteme sollen gekühlt werden.

Besonders vorteilhaft ist hierbei eine Selbstkühlung oder Eigenkühlung von Motoren, die mittels Luft zur Kühlung der Komponenten beitragen. Allerdings ist es schwierig, bei der Selbstkühlung einen geeigneten Luftstrom zu erreichen, weswegen häufig eine aktive Belüftung durch Lüfterräder zur Anwendung kommt.

Der Erfindung liegt die Aufgabe zugrunde, dies zu verbessern.

Die Lösung der Aufgabe gelingt durch Anspruch 1, d.h. eine Vorrichtung zur Kühlung einer dynamoelektrischen Maschine, aufweisend wenigstens eine Ladungsquelle und/oder eine Anoden-Kathoden-Strecke zur Erzeugung einer Strömung eines Kühlmediums durch elektrostatische Kräfte.

Vorteilhaft ist eine Ausführung, wonach die Strömung des Kühlmediums durch die Erzeugung eines elektrischen Feldes und eine dadurch erhöhte Bewegung von Elektronen und/oder polarisierten Gasmolekülen und/oder Ionen hervorrufbar ist.

Die Ladungsquelle ist beispielsweise als eine Elektrode ausgebildet, an welche Gleichspannung oder Wechselspannung angelegt ist. Hierfür eignen sich wenigstens 300 V und höchstens 30 kV.

Wenn eine Mehrzahl an Elektroden vorgesehen ist, weisen die Elektroden beispielsweise das gleiche Potential auf. Alternativ können sie auch paarweise an eine entgegengesetzte Polarität angeschlossen sein.

Eine Elektrode ist vorteilhaft elektrisch leitend ausgebildet oder alternativ als elektrisch aufgeladener Isolator ausgebildet.

Ferner kann die Elektrode auch als Elektret ausgebildet sein. Die Elektroden können direkt an einer elektrischen Spannungsquelle hängen.

Ein Elektret ist ein Material, das eine quasi-permanente elektrische Polarisation oder Ladung aufweist. Es verhält sich ähnlich wie ein Permanentmagnet, der ein dauerhaftes Magnetfeld erzeugt, nur dass es bei einem Elektret um elektrische Felder geht.

Elektrete können aus verschiedenen Materialien hergestellt werden, darunter Polymere, Keramiken und Gläser. Die elektrische Polarisation in Elektreten kann durch verschiedene Prozesse wie elektrische Feldanwendung, Erwärmung oder mechanische Spannung erreicht werden.

Ferner können die leitenden Elektronen blank mit den umgebenden Gasmolekülen in Berührung kommen oder sie können mit elektrisch isolierendem Material vollständig oder wenigstens teilweise überzogen bzw. umgeben sein.

Bei angelegter Spannung werden die Gasmoleküle bzw. Elektronen bzw. Ionen in der näheren Umgebung vorteilhaft in Bewegung gesetzt. Durch die erhöhte Bewegung kommt es zu einem erhöhten Wärmeübergang von der Oberfläche der Maschine auf die Luft in der Umgebung.

Vorteilhaft wird hierbei die Strömungsrichtung der Luft beeinflusst. Es kommt vorteilhaft zu oberflächennahen Turbulenzen.

Auf diese Weise können auch glatte Oberflächen von Maschinen, insbesondere Elektromotoren, gekühlt werden.

Vorteilhaft wird eine Elektrodenstruktur derart aufgebracht, dass in nahezu jeder Motoreinbaulage die erzeugte Turbulenz in Kombination mit einer thermisch induzierten Konvektion optimal zusammenspielt.

Vorteilhaft ist hierbei ferner, eine bestimmte Anordnung der Elektroden. Diese können in parallelen geraden Linien angeordnet sein. Alternativ und vorteilhaft im Hinblick auf die thermisch induzierte Konvektion sind Wellenlinien oder ein zufälliges Muster zu bevorzugen.

Das Kühlmedium ist vorteilhaft Luft.

Ferner wird vorteilhaft ein lonenwind erzeugt, der zur Kühlung der dynamoelektrischen Maschine beiträgt.

Luft als Kühlmedium ist besonders vorteilhaft, da sie, insbesondere als Umgebungsluft, gut verfügbar ist.

Es werden keine geschlossenen Kühlkreisläufe mit einer Kühlflüssigkeit benötigt.

Es können jedoch auch Flüssigkeiten auf die genannte Weise bewegt werden.

Vorzugsweise sind keine sichtbaren Strukturen auf der Motoroberfläche ausgebildet. Lediglich die Vorrichtung ist dort vorteilhaft angeordnet. Die Schutzart der Maschine wird dadurch nicht reduziert.

Eine besondere Anwendung ergibt sich daraus, dass durch die Selbstkühlung auch Anwendungen in Reinräumen in der Folienindustrie oder bei Flusenflug möglich sind. Durch eine verbesserte Kühlung wird der Wirkungsgrad der Maschine erhöht. Auch eine Motorbaugröße wird bei gleicher Leistung reduziert.

Eine verbesserte Kühlung wirkt sich ebenso vorteilhaft auf eine Lagerlebensdauer und die Sensorik auf, da eine geringere thermische Beanspruchung vorliegt. Auch eine partielle Kühlung besonders temperaturempfindlicher Stellen wie Sensorplatten ist möglich. Die Kühlstrukturen können unabhängig von der Motoreinbaulage optimiert werden.

Durch die Erfindung erzeugten turbulenten Strömungen wird eine elektrische Maschine optimal gekühlt. Die turbulenten Strömungen und Strömungen mit hohem Volumen entwärmen die Maschine besser als laminare Strömungen.

Die Lösung der Aufgabe gelingt ferner durch eine dynamoelektrische Maschine aufweisend eine derartige Vorrichtung, angeordnet wenigstens im Wesentlichen an einer Seite der Maschine, beispielsweise einer B-Seite der Maschine, derart, dass das Kühlmedium über eine vorzugsweise Oberfläche der Maschine in Richtung einer gegenüberliegenden Seite der Maschine, beispielsweise einer A-Seite, strömt.

Durch den lonenwind wird vorteilhaft, eine Strömung des Kühlmediums über eine Oberfläche der Maschine von einer Seite in Richtung einer gegenüberliegenden Seite erzeugt.

Ferner kann die Maschine auch eine Kühlmediumleiteinheit aufweisen, die vorteilhaft als Rohr ausgebildet ist, beispielsweise als Doppelwandrohr. Dieses weist vorteilhaft eine Öffnung an der Oberfläche der Maschine auf und verläuft vorteilhaft wenigstens teilweise im Inneren der Maschine. So kann das Kühlmedium durch die hervorgerufene Strömung ins Innere der Maschine geleitet werden, das Innere der Maschine durchströmen und an einer Auslassstelle, insbesondere an einer weiteren Öffnung, austreten.

Es ist möglich, eine Kühlung an der Oberfläche wie auch eine Kühlung im Inneren der Maschine, wie beispielsweise durch die beschriebene Kühlmediumleiteinheit, vorzusehen.

Die Lösung der Aufgabe gelingt ferner durch ein Verfahren zur Kühlung einer dynamoelektrischen Maschine, mittels wenigstens einer Ladungsquelle und/oder einer Anoden-Kathoden-Strecke, wobei eine Strömung eines Kühlmediums durch elektrostatische Kräfte erzeugt wird. Die elektrostatischen Kräfte wirken vorteilhaft auf Elektronen und/oder polarisierte Gasmoleküle und/oder Ionen derart, dass das Kühlmedium strömt.

Besonders vorteilhaft ist die Erzeugung eines lonenwinds, der zur Kühlung eingesetzt wird.

Der lonenwind ist vorteilhaft ein gerichteter Fluss von Ionen. Erzeugt wird er insbesondere durch eine Gasentladung, die von einer an positiver Hochspannung liegenden Elektrode ausgeht. Die Elektrode ist vorteilhaft spitz geformt, was eine sehr starke Inhomogenität des elektrischen Feldes mit sich bringt. Die Ionisation erfolgt vorzugsweise durch Entzug von Elektronen. Die so erzeugten positiv geladenen Ionen werden dann insbesondere von dieser Elektrode (Anode) weg entlang des Feldgradienten beschleunigt. Vorteilhaft ist hierbei, dass an einer gegenüberliegenden, negativ geladenen Elektrode (Kathode) die Ionen wiederum Elektronen aufnehmen.

Auf diese Weise kann eine Strömung erzeugt werden, die die Maschine kühlt.

Die Lösung der Aufgabe gelingt ferner durch eine Verwendung einer Ladungsquelle und/oder einer Anoden-Kathode-Strecke zur Erzeugung einer Strömung eines Kühlmediums durch elektrostatische Kräfte, insbesondere zur Kühlung einer dynamoelektrischen Maschine.

Im Folgenden wird die Erfindung anhand der in den Figuren dargestellten Ausführungsbeispiele näher beschrieben und erläutert. Es zeigen:
- FIG 1 und 2: Ausgestaltungen der Ladungsquelle bzw. Anoden-Kathoden-Strecke,
- FIG 3 bis 8: dynamoelektrische Maschinen,
- FIG 9: ein Verfahren.

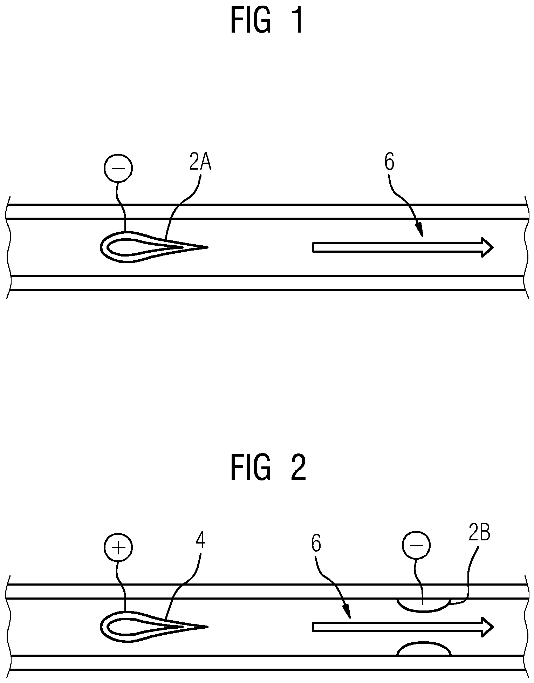

FIG 1 zeigt eine mögliche Ausgestaltung, aufweisend eine Kathode 2A. Eine Kathode ist vorteilhaft eine positive Elektrode. Ferner ist ein lonenwind 6 dargestellt.

Wenn nur eine Elektrode benutzt wird, kann diese plus oder minus oder wechselnde Polarität haben.

In FIG 2 ist die Anode zur Erzeugung der Ionen vorteilhaft positiv geladen und hat eine Spitze. Die Ionen werden von der Spitze weg zur negativen Elektrode beschleunigt. Diese soll keine spitzen, scharfkantige Konturen haben, damit dort keine hohen Feldstärken entstehen. Dort sollen die Ionen wieder Elektronen aufnehmen und so zu neutralen Molekülen werden.

FIG 2 zeigt eine Anode 4, ausgeführt mit einer Spitze zur verbesserten lonisation der Luft. Es ist zudem eine Kathode 2B gezeigt, die beispielsweise als Ring oder Gitter, vorzugsweise mit abgerundeten Kanten für einen geringen Verschleiß, ausgebildet ist. FIG 2 zeigt eine weitere Ausgestaltung, auch hier lässt sich gut ein lonenwind erreichen.

Der lonenwind ist vorteilhaft ein gerichteter Fluss von Ionen. Erzeugt wird er insbesondere durch eine Gasentladung, die von einer an positiver Hochspannung liegenden Elektrode ausgeht. Die Elektrode ist vorteilhaft spitz geformt, was eine sehr starke Inhomogenität des elektrischen Feldes mit sich bringt. Die Ionisation erfolgt vorzugsweise durch Entzug von Elektronen.

Von Vorteil ist, dass sehr hohe elektrische Feldstärken entstehen.

Die so erzeugten positiv geladenen Ionen werden dann insbesondere von dieser Elektrode (Anode 4) weg entlang des Feldgradienten beschleunigt. Vorteilhaft ist hierbei, dass an einer gegenüberliegenden, negativ geladenen Elektrode (Kathode 2B) die Ionen wiederum Elektronen aufnehmen.

Der Begriff "Gasentladung" wird hier verwendet, obwohl es keine Gasentladung im üblichen Sinne ist. Es entstehen Ionen, beim lonenwind mit Stickstoff und Sauerstoff entsteht typisch keine sichtbare Leuchterscheinung, wenn dann im UV-Bereich. Man nennt das auch Dunkelstrahlung. Ferner sind die Ströme auch sehr gering, insbesondere im Nano bis Mikroampere-Bereich.

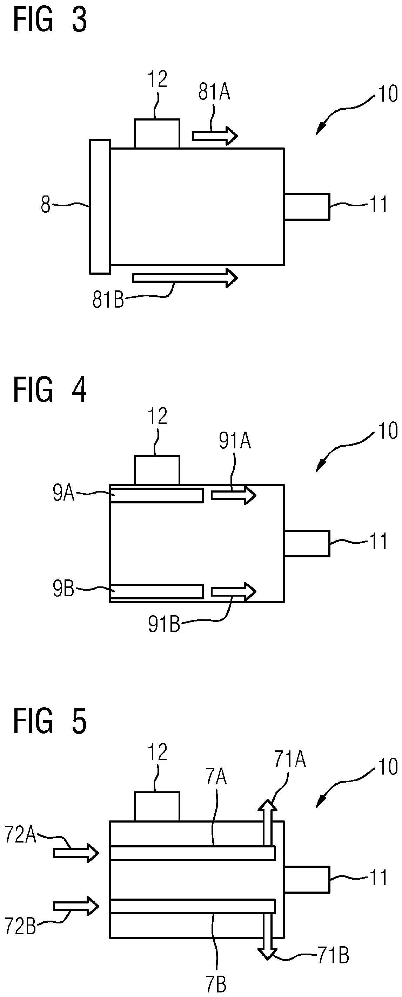

Die Erfindung kann als lonenlüfter 8 bezeichnet werden, der in FIG 3 axial angeordnet ist. Besonders bevorzugt ist hierbei eine Anordnung des lonenlüfters 8 an einer B-Seite des Motors 10. Ferner zeigt die FIG 3 eine Welle 11 sowie einen Anschlusskasten 12. Die Luft strömt in der Figur über eine Motoroberfläche gekennzeichnet durch die Pfeile 81A und 81B.

Die Erfindung eignet sich besonders gut für permanenterregte Synchronmaschinen, Servomotoren oder allgemein Elektromotoren mit Selbstkühlung, insbesondere mittels Luft.

FIG 4 zeigt eine weitere Ausgestaltung mit einer weiteren möglichen Anordnung des lonenlüfters 9A.

Alternativ oder zusätzlich kann ein weiterer lonenlüfter 9B auf dem Motorgehäuse angeordnet sein. Auch hier strömt die Luft vorteilhaft über das Motorgehäuse gezeigt durch 91A und 91B.

FIG 5 zeigt eine weitere Ausgestaltung, wobei lonenlüfter innerhalb der Maschine ausgebildet ist. Die Figur zeigt hierfür zwei lonenlüfter 7A und 7B, die zu einer Durchströmung des Inneren des Motors führen, hierfür können beispielsweise Rohre vorgesehen sein. Die Strömung ist durch die Pfeile 72A, 72B, 71A und 71B dargestellt.

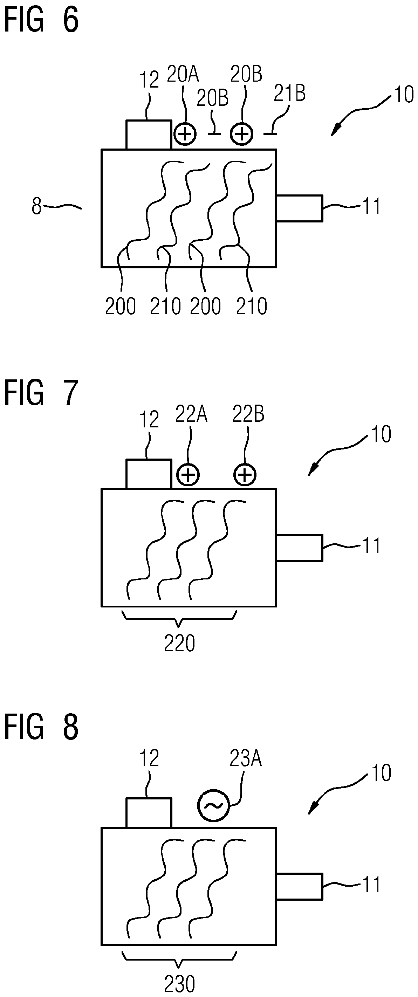

FIG 6 zeigt eine weitere Ausgestaltung der Erfindung. Hierbei sind Elektroden 20A, 21A, 20A, 20B und 21A und 21B auf einer Motoroberfläche angeordnet.

Die Ausgestaltung in FIG 6 zeigt sowohl Elektroden mit positiver Polarität als auch Elektroden mit negativer Polarität, die vorteilhaft abwechselnd angeordnet sind und sich über den Motor.

Die Elektroden sind über einen Umfang des Motors angeordnet, beispielsweise in Wellenlinien, gezeigt durch 20C, 21C, 20D und 21D. Allerdings ist auch eine rein zufällige Anordnung möglich.

Eine andere Anordnung zeigt sich in FIG 7. Dort sind lediglich Elektronen einer Polarität, hier positiv, 22A, 22B gezeigt, die ebenso beispielhaft wellenförmig gezeigt durch 22C auf einer Oberfläche des Motors angeordnet sind.

FIG 8 zeigt Elektroden auf der Motoroberfläche mit einer Wechselspannung 23A, auch hier ist eine wellenförmige Anordnung 23C möglich.

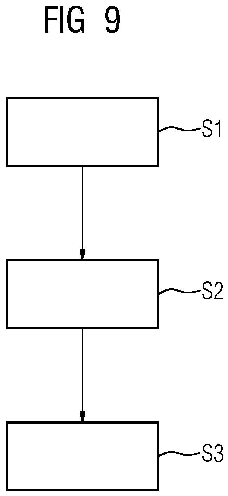

FIG 9 zeigt ein Verfahren.

In einem Verfahrensschritt S1 wird eine Strömung eines Kühlmediums durch elektrostatische Kräfte erzeugt.

In einem Verfahrensschritt S2 durchströmt das Kühlmedium eine dynamoelektrische Maschine.

In einem Verfahrensschritt S3 wird die Maschine gekühlt.

## Patentansprüche

1. Vorrichtung zur Kühlung einer dynamoelektrischen Maschine (10), aufweisend wenigstens eine Ladungsquelle und/oder eine Anoden-Kathoden-Strecke zur Erzeugung einer Strömung eines Kühlmediums durch elektrostatische Kräfte.

2. Vorrichtung nach Anspruch 1, wobei die Strömung des Kühlmediums durch die Erzeugung eines elektrischen Feldes und eine dadurch eine erhöhte Bewegung von Elektronen und/oder polarisierten Gasmolekülen und/oder Ionen hervorrufbar ist.

3. Vorrichtung nach einem der vorhergehenden Ansprüche, wobei die Ladungsquelle als wenigstens eine Elektrode ausgebildet ist, an welche eine Gleichspannung oder Wechselspannung angelegt ist, vorzugsweise mit wenigstens 300 V und höchstens 30 kV.

4. Vorrichtung nach einem der vorhergehenden Ansprüche, wobei eine Mehrzahl an Elektroden vorgesehen ist, wobei die Elektroden das gleiche Potential aufweisen oder paarweise an eine entgegengesetzte Polarität angeschlossen sind.

5. Vorrichtung nach einem der vorhergehenden Ansprüche, wobei die Elektrode elektrisch leitend ausgebildet ist oder als elektrisch aufgeladener Isolator ausgebildet ist oder als Elektret ausgebildet ist.

6. Vorrichtung nach einem der vorhergehenden Ansprüche, wobei das Kühlmedium Luft ist.

7. Vorrichtung nach einem der vorhergehenden Ansprüche, wobei ein lonenwind erzeugbar ist.

8. Dynamoelektrische Maschine (10), aufweisend eine Vorrichtung nach einem der Ansprüche 1 bis 7, angeordnet wenigstens im Wesentlichen an einer Seite der Maschine, beispielsweise einer B-Seite der Maschine, derart, dass das Kühlmedium, vorzugsweise über eine Oberfläche der Maschine, in Richtung einer gegenüberliegenden Seite der Maschine, beispielsweise einer A-Seite, strömt.

9. Dynamoelektrische Maschine nach Anspruch 8, aufweisend eine Kühlmediumleiteinheit, wobei die Kühlmediumleiteinheit als ein Rohr ausgebildet ist, beispielsweise Doppelwandrohr, das wenigstens eine Öffnung an der Oberfläche der Maschine aufweist und wenigstens teilweise im Inneren der Maschine verläuft.

10. Dynamoelektrische Maschine nach einem der Ansprüche 8 oder 9, wobei an der Öffnung die Vorrichtung wenigstens teilweise angeordnet ist, derart, dass das Kühlmedium durch die Kühlmediumleiteinheit ins Innere der Maschine geleitet wird, das Innere der Maschine durchströmt und an einer Auslassstelle, insbesondere an einer weiteren Öffnung an der Oberfläche der Maschine, austritt.

11. Verfahren zur Kühlung einer dynamoelektrischen Maschine mittels wenigstens einer Ladungsquelle und/oder einer Anoden-Kathoden-Strecke, wobei eine Strömung eines Kühlmediums durch elektrostatische Kräfte erzeugt wird.

12. Verfahren nach Anspruch 11, wobei durch die Erzeugung eines elektrischen Feldes eine Bewegung von Elektronen und/oder polarisierten Gasmolekülen und/oder Ionen hervorgerufen oder erhöht wird, wodurch eine Strömung eines Kühlmediums angeregt wird.

13. Verfahren nach einem der Ansprüche 11 oder 12, wobei ein lonenwind (6) durch mindestens eine Ladungsquelle, und/oder eine Anoden-Kathoden-Strecke erzeigt wird, wobei der erzeugte lonenwind (6) über eine Oberfläche der Maschine (10) und/oder durch ein Inneres der Maschine (10) geleitet wird.

14. Verwendung einer Ladungsquelle und/oder einer Anoden-Kathoden-Strecke zur Erzeugung einer Strömung eines Kühlmediums durch elektrostatische Kräfte, insbesondere zur Kühlung einer dynamoelektrischen Maschine (10).
